# EUROPÄISCHE PATENTSCHRIFT

(11) **EP 3 142 793 B1**
(45) Veröffentlichungstag und Bekanntmachung des Hinweises auf die Patenterteilung: **22.08.2018**
(21) Anmeldenummer: 15725531.6
(22) Anmeldetag: 13.05.2015
(51) Int. Cl.: B01L 3/02, B65G 47/00, B29C 31/00

(54) **VORRICHTUNG ZUM AUSRICHTEN VON EINZELELEMENTEN, INSBESONDERE FILTERELEMENTEN, BEIM TRANSFER ZUR WEITEREN VERARBEITUNG**
DEVICE FOR ORIENTING INDIVIDUAL ELEMENTS, IN PARTICULAR FILTER ELEMENTS, DURING THE TRANSFER THEREOF FOR FURTHER PROCESSING
DISPOSITIF POUR ORIENTER DES ÉLÉMENTS INDIVIDUELS, EN PARTICULIER DES ÉLÉMENTS FILTRANTS, LORS DE LEUR TRANSFERT EN VUE D'UN TRAITEMENT SUBSÉQUENT

(30) Priorität: 13.05.2014 DE 102014209001
(43) Veröffentlichungstag der Anmeldung: 22.03.2017
(73) Patentinhaber: HEKUMA GmbH, 85386 Eching (DE)
(72) Erfinder: GEISSLER, Anton, 85386 Eching (DE); HINTERMAIER, Konrad, 85459 Berglern (DE)
(74) Vertreter: Klingseisen, Franz
(86) Internationale Anmeldenummer: PCT/EP2015/060550
(87) Internationale Veröffentlichungsnummer: WO 2015/173282

(56) Entgegenhaltungen:
- EP-A1- 1 281 643
- EP-A1- 2 226 276
- WO-A1-2014/207022
- DE-U1-202013 103 784
- DE-U1-202013 103 784
- US-A- 5 735 382

## Beschreibung

Die Erfindung betrifft eine Vorrichtung zum Ausrichten von Einzelelementen, insbesondere von Filterelementen, beim Transfer zur weiteren Verarbeitung bzw. Handhabung wie zum Einsetzen in Spritzgussteile, insbesondere Pipettenspitzen.

DE 10 2013 204 425 beschreibt eine Vorrichtung, mittels der als Schüttgut vorliegende zylindrische Filterelemente durch eine Vereinzelungseinrichtung in Aufnahmebohrungen einer Transfereinrichtung eingesetzt werden, wobei im Umfangsbereich eines Drehtisches beabstandete Gruppen von Bohrungen zur Aufnahme der Filterelemente vorgesehen sind. Der Drehtisch bildet eine Transfereinrichtung zwischen der Vereinzelungseinrichtung und einer Abholposition der Filterelemente, von der aus die Filterelemente durch eine Handlingeinrichtung in Pipettenspitzen eingesetzt werden.

Bestimmte Filterarten müssen in einer bestimmten Ausrichtung in die Pipettenspitzen eingesetzt werden. Auch werden Mehrkomponentenfilter verwendet, die aus zwei oder mehreren Komponenten bestehen, wobei solche Mehrkomponentenfilter in einer bestimmten Ausrichtung in die Pipettenspitzen eingesetzt werden müssen. Bei der Vereinzelung der als Schüttgut vorliegenden Mehrkomponentenfilter werden diese in unterschiedlicher Ausrichtung in die Aufnahmebohrungen der Transfereinrichtung eingesetzt, sodass an der Abholposition der Transfereinrichtung in einer Gruppe unterschiedlich ausgerichtete Mehrkomponentenfilter vorhanden sind. Vor dem Einsetzen in die Pipettenspitzen müssen alle Filterelemente einer Gruppe in die gleiche Ausrichtung gebracht werden.

DE 20 2013 103 784 U1 sowie WO 2014 / 207 022 A1 beschreiben eine Wendeeinrichtung mit einem über 180° geführten Schlauch, der von einer Aufnahmetasche zu einer beabstandeten Ausnahmetasche einer Transfereinrichtung führt.

US 5 735 282 A beschreibt eine Wendeeinrichtung für zylindrische Werkstücke mit einem äußeren, um 180° verdrehbaren Wendezylinder, in dem ein innerer Wendezylinder relativ zum äußeren Wendezylinder verdrehbar und mit einer Umfangsnut versehen ist, in die ein vom Innenumfang des äußeren Wendezylinders vorstehender Stift eingreift, wobei der innere Wendezylinder mit einer diametral durchgehenden Bohrung versehen ist und der äußere Wendezylinder nur auf einer Seite eine Bohrung zur Aufnahme des zu wendenden Werkstückes aufweist. Der auf dem Innenumfang des äußeren Wendezylinders vorstehende Stift dient zur Identifizierung der Ausrichtung der Werkstücke.

Der Erfindung liegt die Aufgabe zugrunde, eine Vorrichtung vorzuschlagen, um nichtzutreffend ausgerichtete Einzelelemente bzw. Filterelemente in die richtige Position zu bringen, bevor sie weiterverarbeitet bzw. in Pipettenspitzen eingesetzt werden.

Diese Aufgabe wird durch die Merkmale des Anspruchs 1 gelöst.

Erfindungsgemäß werden Einzelelemente bzw. Filterelemente, die als nichtzutreffend ausgerichtet identifiziert werden, bei einer sich taktweise bewegenden Transfereinrichtung in einer Station aus der Aufnahmetasche entnommen, gewendet und in zutreffender Ausrichtung vorzugsweise in der gleichen Station wieder eingesetzt.

Bei einem Verfahren zum Ausrichten von in Aufnahmetaschen einer Transfereinrichtung angeordneten Einzelelementen, insbesondere von Filterelementen, wobei die Aufnahmetaschen reihenförmig oder gruppenweise angeordnet und schrittweise von einer Station in eine folgende Station bewegt werden, werden folgende Schritte ausgeführt:
Feststellen, in welchen Aufnahmetaschen nicht zutreffend ausgerichtete Einzelelemente vorhanden sind,
Ausstoßen der als nichtzutreffend ausgerichtet festgestellten Einzelelemente aus den zugeordneten Aufnahmetaschen, Wenden der ausgestoßenen Einzelelemente um 180° und
Wiedereinführen der gewendeten Einzelelemente in die zugeordneten Aufnahmetaschen.
Hierbei erfolgt das Feststellen der Ausrichtung der Einzelelemente zweckmäßigerweise in einer Station, worauf in einer nachfolgenden Station nichtzutreffend ausgerichtete Einzelelemente ausgestoßen, gewendet und wieder in die zugeordneten Aufnahmetaschen eingeführt werden, worauf die Gruppe von Aufnahmetaschen zur nächsten Station bewegt werden kann.

Von Vorteil ist, wenn beim Wenden der Einzelelemente diese eine vorgegebene Zeit in der Wendeeinrichtung zurückgehalten werden, bevor sie wieder in die Aufnahmetaschen eingesetzt werden.

Die zu wendenden Einzelelemente werden aus den Aufnahmetaschen in wenigstens ein mit Ausnehmungen oder Bohrungen versehenes Wendeelement überführt, das um 180° verdreht wird, worauf die Einzelelemente aus den Bohrungen oder Ausnehmungen wieder in die Aufnahmetaschen überführt werden.

Eine Vorrichtung zum Ausrichten von Einzelelementen, insbesondere von Filterelementen, weist eine plattenförmige Transfereinrichtung auf, in der Aufnahmetaschen in Gruppen oder Reihen angeordnet sind, wobei die Transfereinrichtung schrittweise von einer Station in eine folgende Station bewegt wird. Eine Lageerkennungseinrichtung, beispielsweise eine elektronische Kamera, stellt die Ausrichtung der Einzelelemente in den Ausnahmetaschen fest und gibt ein Signal an eine Ausstoßeinrichtung, wenn eine Fehlausrichtung eines Einzelelementes festgestellt wird, sodass die Ausstoßeinrichtung das als nichtzutreffend erkannte Einzelelement aus der zugeordneten Aufnahmetasche auswirft und in eine Wendeeinrichtung überführt, die das ausgeworfene Einzelelement so wendet, dass es in gewendetem Zustand in die Aufnahmetasche wieder eingesetzt werden kann.

Als Wendeeinrichtung ist ein um 180° verdrehbarer Zylinder als Wendeelement vorgesehen, wobei das Wendeelement Ausnehmungen bzw. Bohrungen zur Aufnahme eines zu wendenden Einzelelementes aufweist.
Die Wendeeinrichtung kann auch mehrere Wendeelemente aufweisen.

In dem Wendezylinder werden diametral verlaufende Aufnahmebohrungen bzw. Ausnehmungen vorgesehen, in denen die zu wendenden Einzelelemente aufgenommen werden.
Von Vorteil ist, dass der Wendezylinder in einer stationären Hülse oder in einem stationären Block verdrehbar ist, wobei die Hülse bzw. der Block den Ausnehmungen oder Bohrungen im Wendezylinder gegenüberliegende Bohrungen oder Ausnehmungen aufweist, von denen die von den Aufnahmetaschen abliegende Bohrung einen Durchmesser aufweist, der kleiner ist als der Durchmesser der Aufnahmebohrung im Wendezylinder, damit das Einzelelement im Wendezylinder mit Saug- oder Überdruck beaufschlagt werden kann.

Es können mehrere Wendezylinder nebeneinander liegend einzeln verdrehbar als Wendeeinrichtung vorgesehen werden.

Von Vorteil ist es, wenn wenigstens eine lösbare Rückhalteeinrichtung vorgesehen ist, welche ein zu wendendes Einzelelement in dem Wendeelement zur Abgabe bereithält, sodass das gewendete Einzelelement zu einem bestimmten Zeitpunkt oder auch in einer anderen Station in die zugeordnete Aufnahmetasche überführt werden kann.

Die Aufnahmetaschen werden vorteilhafterweise mit einer Blasbohrung versehen, sodass Einzelelemente durch Unterdruck angesaugt und durch Überdruck ausgestoßen werden können.

Die Wendeeinrichtung wird vorzugsweise stationär über der von Station zu Station beweglichen Transfereinrichtung angeordnet, sie kann aber auch relativ zur Transfereinrichtung bewegbar sein.

Zum Steuern der verschiedenen Abläufe wird eine elektronische Steuereinrichtung vorgesehen, die die Abfolge der verschiedenen Vorgänge steuert, wobei beispielsweise die Steuereinrichtung die Auswerfeinrichtung in Abhängigkeit von den von der Lageerkennungseinrichtung abgegebenen Signalen ansteuert, den oder die Wendezylinder ansteuert und dergleichen.

Vorteilhafterweise werden die als nichtzutreffend ausgerichtet identifizierten Einzelelemente vorzugsweise durch Blas- und/oder Saugdruck in eine Ausnehmung oder Bohrung eines Wendeelementes überführt, das um 180° gedreht wird, worauf die so gewendeten Einzelelemente wieder vorzugsweise durch Blas- und/oder Saugdruck in die Aufnahmetasche der Transfereinrichtung überführt werden.

Die Erfindung wird beispielsweise anhand der Zeichnung näher erläutert. Es zeigen
- Fig. 1: eine perspektivische Ansicht einer Ausführungsform eines Drehtisches mit einer Vereinzelungseinrichtung,
- Fig. 2: eine Draufsicht auf einen Drehtisch mit zusätzlichen Stationen,
- Fig. 3: in perspektivischer Ansicht einen aus Komponenten zusammengesetzten Mehrkomponentenfilter,
- Fig. 4: eine Schnittansicht durch eine Wendestation,
- Fig. 5: eine Ansicht von links in Fig. 4, und
- Fig. 6: entsprechend Fig. 5 eine Seitenansicht einer Wendestation mit mehreren Wendeelementen.

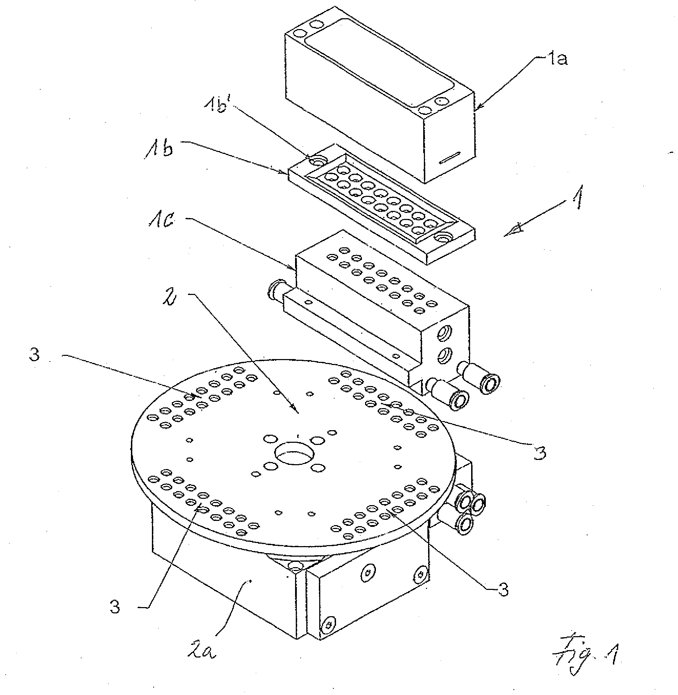

Fig. 1 zeigt in einer auseinandergezogenen Ansicht eine Vereinzelungseinrichtung 1 mit einem rahmenförmig gestalteten Aufnahmebehälter 1a zur Aufnahme von als Schüttgut vorliegenden zylindrischen Filterelementen, einer den Boden des Aufnahmebehälters 1a bildenden Siebplatte 1b mit Zentrierhülse 1b', die in eine entsprechende Zentrierbohrung an der Unterseite des Aufnahmebehälters 1a eingreift, und einer Pufferplatte 1c. Diese Vereinzelungseinrichtung 1 ist über einem Drehtisch 2 so angeordnet, dass eine Gruppe von Aufnahmebohrungen 3 im Drehtisch 2 unter den Bohrungen der Pufferplatte 1c liegen, damit aus der Pufferplatte 1c einzelne Filterelemente in die Aufnahmebohrungen 3 im Drehtisch 2 überführt werden können. Durch die Vereinzelungseinrichtung 1 werden die ungeordneten Filterelemente im Aufnahmebehälter 1a mittels der Siebplatte 1b so vereinzelt, dass sie in die Aufnahmebohrungen der Pufferplatte 1c eingesetzt werden. Der Drehtisch 2 bildet eine Transfereinrichtung und er weist im Umfangsbereich bei diesem Ausführungsbeispiel vier Gruppen von Aufnahmebohrungen 3 auf. Der Drehtisch 2 ist auf einem Rundschalttisch 2a angeordnet, der den Drehtisch 2 taktweise verdreht, sodass schrittweise die einzelnen Gruppen von Aufnahmebohrungen 3 von einer Station in die nächste Station bewegt werden. Eine nicht dargestellte Handlingeinrichtung entnimmt die Filterelemente gruppenweise aus den Aufnahmebohrungen 3 in der Abholstation, die z.B. der Vereinzelungseinrichtung 1 diametral gegenüberliegt, und überführt sie beispielsweise in einen Zwischenspeicher einer Bestückungseinrichtung oder direkt in gruppenweise angeordnete Pipettenspitzen.

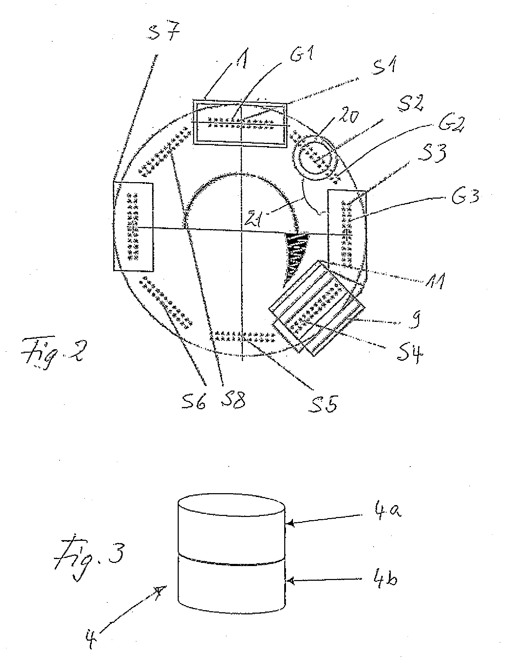

Fig. 2 zeigt eine Draufsicht auf einen Drehtisch mit beispielsweise acht Stationen gegenüber den vier Stationen des in Fig. 1 wiedergegebenen Drehtisches, wobei in jeder Station eine Gruppe G1 bis G8 von Aufnahmebohrungen 3 vorhanden ist. Eine Gruppe G kann z.B. 2 bis 60 Aufnahmebohrungen 3 aufweisen. In der Station S1 ist die in Fig. 1 wiedergegebene Vereinzelungseinrichtung 1 über dem Drehtisch 2 positioniert. In der nächsten Station S2 kann eine Einrichtung zur Lageerkennung der Filterelemente in den Aufnahmebohrungen 3 des Drehtisches 2 vorgesehen sein. In der durch einen Pfeil angedeuteten Drehrichtung des Drehtisches folgt eine Wendestation S3, an die sich eine Station S4 anschließen kann, in der die in der vorausgehenden Station S3 ausgerichteten Filterelemente für die weitere Handhabung vorbereitet oder behandelt werden können.

In der nächsten, der Station S1 diametral gegenüberliegenden Position ist z.B. eine Filterabholstation S5 vorgesehen, aus der die Filterelemente gruppenweise entnommen und durch die nicht dargestellte Handlingeinrichtung in einen Zwischenspeicher oder direkt in eine Gruppe von Pipettenspitzen eingesetzt werden.
S6 und S8 sind Leerstationen, zwischen denen eine Reinigungs- und Rejektstation S7 vorgesehen sein kann, an der die Aufnahmebohrungen 3 im Drehtisch 2 gereinigt werden und eventuell in einzelnen Aufnahmebohrungen 3 verbliebene Filterelemente oder Filterreste ausgestoßen werden.

Die einzelnen zylindrischen Filterelemente, die in der Vereinzelungseinrichtung 1 der Fig. 1 in die einzelnen Aufnahmebohrungen 3 des Drehtisches 2 eingesetzt werden, können beispielsweise den in Fig. 3 wiedergegebenen Aufbau haben, wonach ein zylindrisches Filterelement 4 aus zwei einzelnen Komponenten 4a und 4b zusammengesetzt ist. In Fig. 3 ist die untere Komponente 4b mit einer Markierung 4b1 versehen. Um die zutreffende Ausrichtung des Filterelementes 4 mit der Komponente 4a oben feststellen zu können, werden die einzelnen Komponenten 4a und 4b beispielsweise unterschiedlich eingefärbt oder in anderer Weise markiert, damit festgestellt werden kann, welche der Mehrkomponentenfilter 4 mit zutreffender Ausrichtung in den Aufnahmebohrungen 3 eingesetzt sind und welche nicht. Beispielsweise hat die obere Komponente 4a eine rote Farbe, während die untere Komponente 4b blau ist. Es kann auch eine andere Art von Markierung eines Mehrkomponentenfilters vorgesehen werden, damit in der Station S2 durch eine Lageerkennungseinrichtung 20 die Ausrichtung der Filterelemente 4 in den einzelnen Aufnahmebohrungen 3 festgestellt werden kann.

Beim Einsetzen der Filterelemente 4 in die nichtdargestellten Pipettenspitzen muss beispielsweise die Komponente 4a oben und die Komponente 4b unten positioniert sein. In der Vereinzelungseinrichtung 1 an der Station S1 werden die einzelnen Filterelemente 4 in unterschiedlicher Ausrichtung in die Aufnahmebohrungen 3 eingesetzt, sodass beim einen Filterelement 4 die Komponente 4b oben und die Komponente 4a unten positioniert ist, während in der benachbarten Aufnahmebohrung 3 ein Filterelement 4 in umgekehrter Ausrichtung angeordnet ist. Dies wird in der Lageerkennungsstation S2 festgestellt, wobei über eine entsprechende elektronische Auswertung 21 beispielsweise eine elektronische Kamera Signale an die folgende Wendestation S3 gegeben werden, in der aus den als falsch besetzt identifizierten Aufnahmebohrungen 3 das Filterelement 4 ausgestoßen und dann gewendet wird.

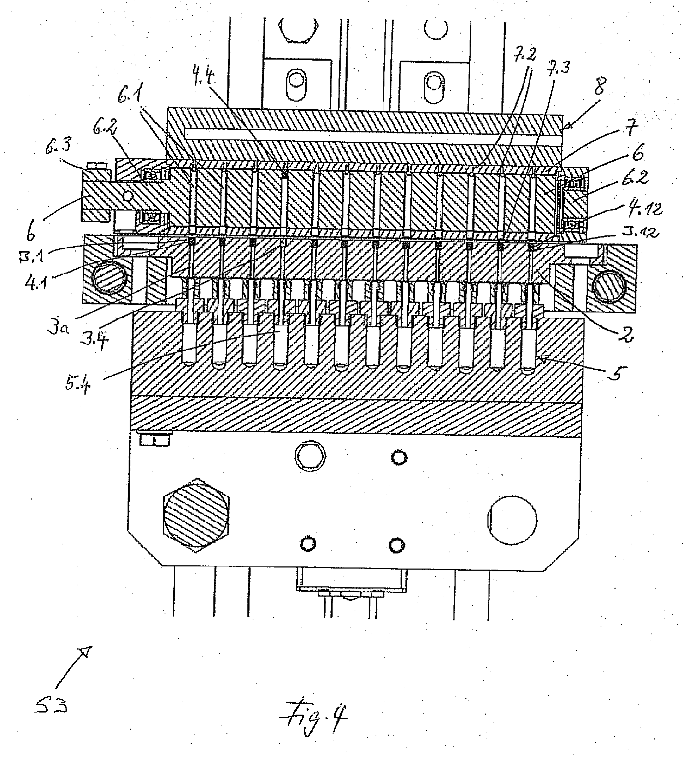

Fig. 4 zeigt schematisch eine Ausführungsform der Wendestation S3, wobei in dem Drehtisch 2 eine Reihe von z.B. zwölf Aufnahmebohrungen 3 ausgebildet ist, die im Folgenden als Aufnahmetaschen bzw. als Filtertaschen 3.1 bis 3.12 bezeichnet werden. Bei dem dargestellten Ausführungsbeispiel sind elf Filtertaschen 3.1 bis 3.3 und 3.5 bis 3.12 mit zutreffend ausgerichteten Filterelementen 4 besetzt, während in der von links vierten Filtertasche 3.4 ein nichtzutreffend ausgerichtetes Filterelement eingesetzt war, das in der Lageerkennungsstation S2 als nichtzutreffend ausgerichtet identifiziert wurde.
Unter den einzelnen Filtertaschen 3 verläuft eine Bohrung 3a zu einer unter der Transfereinrichtung 2 bzw. unter dem Drehtisch 2 angeordneten Blas- und Saugvorrichtung 5, durch die wahlweise an einzelnen Bohrungen 3a Unterdruck oder Überdruck angelegt werden kann, wobei die Blas- und Saugvorrichtung 5 durch eine nicht dargestellte Steuereinrichtung in Abhängigkeit von Steuersignalen umgeschaltet werden kann, die bei dem dargestellten Ausführungsbeispiel von der Lageerkennungsstation S2 abgegeben werden.

Bei der Blas- und Saugvorrichtung 5 führen zu jeder einzelnen Bohrung 3a Schlauchanschlüsse für das Anlegen von Saugdruck oder Überdruck, sodass jede einzelne Bohrung 3a in Abhängigkeit von den Steuersignalen von der Lageerkennungsstation mit Unterdruck oder Überdruck beaufschlagt werden kann, wie dies bei 5.4 in Fig. 4 erkennbar ist.

Über der plattenförmigen Transfereinrichtung 2 bzw. über dem Drehtisch 2 ist ein Wendeelement 6 angeordnet, das eine Reihe von Bohrungen bzw. Ausnehmungen 6.1 aufweist, die auf die Filtertaschen 3.1 bis 3.12 ausgerichtet sind und den gleichen Querschnitt haben wie diese. In Fig. 4 ist das Filterelement 4.4 durch Blasdruck von der Blas- und Saugvorrichtung 5 aus der Filtertasche 3.4 ausgestoßen worden, sodass es sich am oberen Ende der zugeordneten Bohrung 6.1 befindet.

Im nächsten Schritt wird das Wendeelement 6 um 180° verdreht, sodass sich das Filterelement 4.4 in der gewendeten Stellung über der zugeordneten Filtertasche 3.3 befindet, worauf durch Saugdruck von der Blas- und Saugvorrichtung 5 das Filterelement 4.4 wieder in die Filtertasche 3.4 überführt wird, aus der sie zuvor ausgestoßen wurde.
Hierauf kann der Drehtisch 2 bzw. eine entsprechende Transfereinrichtung weiterbewegt werden, bis eine weitere Reihe von Filtertaschen 3.1 bis 3.12 unter den Bohrungen 6.1 des Wendeelementes 6 positioniert ist.

Bei dem dargestellten Ausführungsbeispiel ist das um 180° verdrehbare Wendeelement 6 als zylindrische Achse bzw. als Wendezylinder ausgebildet, der an beiden Enden durch Lager 6.2 gelagert und durch einen Drehantrieb 6.3 um 180° verdrehbar ist.

Das zylindrische Wendeelement 6 ist in einer Hülse 7 verdrehbar, die den Filtertaschen 3 beziehungsweise 3.1 bis 3.12 gegenüberliegend mit einer Bohrung 7.3 entsprechend dem Durchmesser der Filtertaschen 3 für den Durchgang eines Filterelementes 4 versehen ist, während diametral gegenüberliegend Bohrungen 7.2 kleineren Durchmessers in der Hülse 7 ausgebildet sind, durch die Saugdruck oder Überdruck angelegt werden kann.

Mit 8 ist eine Blas- und Saugvorrichtung über der Hülse 7 des Wendeelementes 6 wiedergegeben, durch die wahlweise Saugdruck oder Überdruck an den Bohrungen 7.2 der Hülse 7 angelegt werden kann.
Bei dem dargestellten Ausführungsbeispiel kann durch Anlegen von Überdruck an der Blas- und Saugvorrichtung 8 das Filterelement 4.4 in die zugeordnete Filtertasche 3.4 zusätzlich zu dem von unten angreifenden Saugdruck der Blas- und Saugvorrichtung 5 überführt werden. Hierbei kann Blasdruck auf alle Bohrungen 7.2 einwirken, weil hierdurch die in den Filtertaschen 3 eingesetzten Filterelemente 4 in ihrer Position gehalten werden.

Auf dem Innenumfang der Hülse 7 können Nuten über einen Teil des Innenumfangs der Hülse 7 verlaufen, die mit den Bohrungen 7.2 in Verbindung stehen, sodass beim Wenden des Filterelementes 4.4 dieses durch den an der zugeordneten Bohrung 7.2 angelegten Unterdruck über einen Teil des Umfangs gehalten wird.

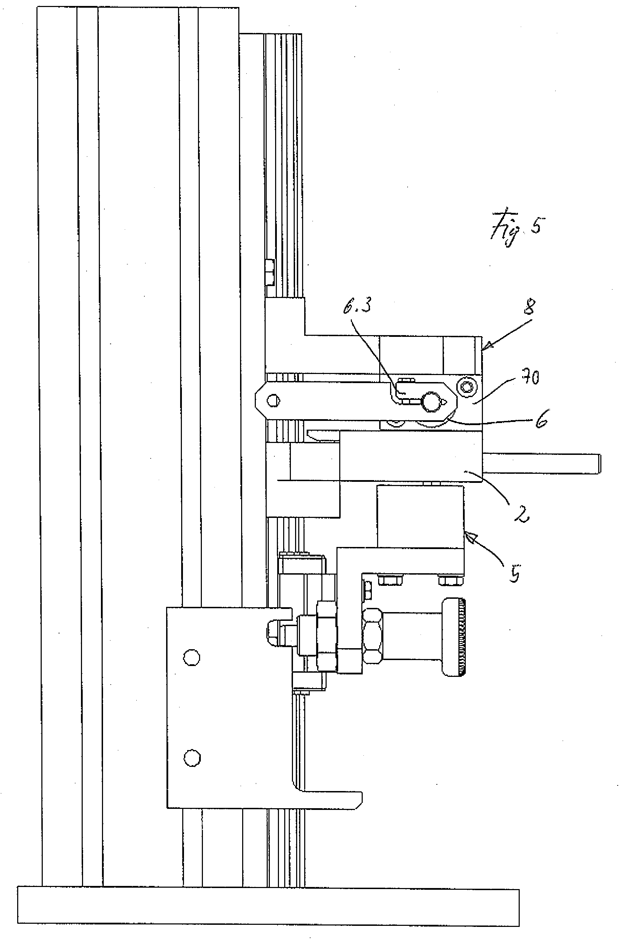

Fig. 5 zeigt eine Seitenansicht der Vorrichtung in Fig. 4, wobei der Drehtisch 2 als Platte 2 einer Transfereinrichtung schematisch wiedergegeben ist, die unter das Wendeelement 6 verschoben und wieder zurückbewegt werden kann.

Die Blas- und Saugvorrichtung 5 kann an die Unterseite der Transfereinrichtung 2 durch Anheben angesetzt und durch eine Bewegung nach unten abgesenkt werden.

Es sind verschiedene Abwandlungen der beschriebenen Bauform möglich.

Anstelle der Lageerkennungsstation S2 kann eine optische Lageidentifizierungseinrichtung auch an der Wendestation S3 vorgesehen werden. An der Lageerkennungsstation S2 erfolgt die Lageerkennung zweckmäßigerweise durch eine Kameraprüfung. In entsprechender Weise kann in der Station S3 eine optische Prüfeinrichtung integriert werden.

Nach einer anderen Ausführungsform kann die Wendeeinrichtung relativ zum Drehtisch 2 bzw. relativ zu der Transfereinrichtung 2 bewegt werden, insbesondere wenn am Drehtisch 2 beispielsweise zwei nebeneinanderliegende Reihen von Filtertaschen 3 vorgesehen sind, wie dies in Fig. 1 als Beispiel gezeigt ist. Das Bewegen der Wendeeinrichtung relativ zum Drehtisch 2 hat den Vorteil, dass die Taktfolge der Drehung des Drehtisches nicht beeinträchtigt wird.

Nach einer weiteren Ausgestaltung können in der Wendestation beispielsweise zwei nebeneinanderliegende Wendeachsen 6 über den beiden Reihen von Filtertaschen 3 vorgesehen werden, wobei die beiden Wendeachsen 6 auch unabhängig voneinander um 180° verdrehbar sein können. Auf diese Weise kann an der Wendestation eine Relativverschiebung zwischen Drehtisch 2 und Wendeeinrichtung entfallen, weil durch die Wendeeinrichtung gleichzeitig alle Filtertaschen 3 einer aus zwei Reihen bestehenden Gruppe von Filtertaschen bearbeitet werden können.

Es ist auch möglich, mehr als zwei Wendeelemente 6 in der Wendeeinrichtung vorzusehen, um mehrere Reihen von Filtertaschen 3 hinsichtlich Wenden von einzelnen Filterelementen zu bearbeiten.

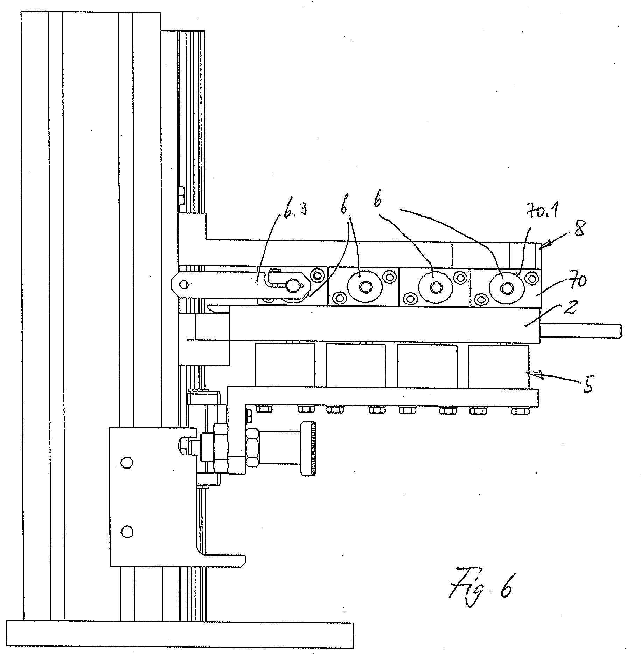

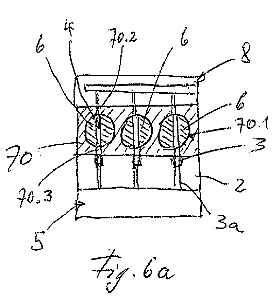

Fig. 6 zeigt schematisch eine solche Anordnung mit nebeneinanderliegenden Wendeachsen 6, die bei diesem Ausführungsbeispiel alle durch die Drehvorrichtung 6.3 verdreht werden. Die Wendeachsen 6 können auch einzeln um 180° verdrehbar sein.

Bei diesem Ausführungsbeispiel sind die Wendeachsen 6 jeweils in einer Lagerbohrung 70.1 eines Blocks 70 um 180° verdrehbar, wobei der Block 70 die Funktion der Hülse 7 in Fig. 4 übernimmt, sodass die Blasbohrungen 7.2 und die Durchgangsbohrungen 7.3 der Hülse 7 in dem Block 70 als Blasbohrungen 70.2 und Durchgangsbohrungen 70.3 vorgesehen werden können, wie dies Fig. 6a zeigt.

Der Durchmesser einer Wendeachse 6 ist im Verhältnis zur Länge eines Filterelementes 4 in Fig. 4 relativ groß. In Fig. 6a sind die Durchmesser der Wendeachsen 6 kleiner ausgelegt. Der Durchmesser kann z.B. die drei- bis vierfache Länge eines Filterelementes betragen.

Wenn die Wendeeinrichtung relativ zum Drehtisch 2 in der Wendestation beweglich ist, kann die Wendeeinrichtung auf einem Schlitten positioniert sein, auf dem auch eine Kamera positioniert werden kann für die Lageerkennung der Filterelemente, deren gegenüberliegende Enden in der Regel unterschiedlich eingefärbt sind.

In dem Wendeelement 6 oder am Ende der Bohrungen 6.1 im Wendeelement 6 kann eine Rückhalteeinrichtung vorgesehen werden, die das ausgestoßene Filterelement eine vorgegebene Zeit lang zurückhält, Danach kann das Filterelement nach Freigeben durch die Rückhalteeinrichtung wieder in die zugeordnete Filtertasche in der richtigen Ausrichtung eingesetzt werden.

Die Rückhalteeinrichtung kann in verschiedener Weise ausgebildet sein. Als Beispiel kann ein Schieber vorgesehen werden, der quer zur Bohrung 6.1 verstellbar ist, um diese abzusperren und freizugeben.

Es können beispielsweise auch stiftförmige Elemente vorgesehen werden, die zum Versperren der Durchgangsbohrung für ein Filterelement in die Durchgangsbohrung 6.1 hineinragen und zum Freigeben zurückgezogen werden.

Die Rückhalteeinrichtung kann auch durch Anlegen von Vakuum an der Bohrung 6.1 ausgebildet werden, wobei das Vakuum durch seitliche Bohrungen an der Bohrung 6.1 angelegt werden kann.

Anstelle eines Drehtisches 2 kann auch eine Transfereinrichtung verwendet werden, durch die Gruppen von Aufnahmebohrungen 3 linear bewegt werden.

In Abhängigkeit von der Formgebung der Einzelelemente, die in der vorhergehenden Beschreibung als zylindrische Filterelemente 4 wiedergegeben sind, können an der Transfereinrichtung 2 Gruppen von Aufnahmetaschen anstelle von Aufnahmebohrungen 3 vorgesehen sein, die eine an die Formgebung der Einzelelemente angepasste Formgebung haben. Die zylindrische Formgebung der Einzelelemente in Form der Filterelemente 4 ist als Beispiel anzusehen.

Weiterhin ist es möglich, alle Aufnahmebohrungen 3 bzw. entsprechende Aufnahmetaschen in einer Station mittels Vakuum zu beaufschlagen, um zu prüfen, ob alle Aufnahmebohrungen 3 mit einem Filterelement 4 besetzt sind. Eine solche Überprüfung kann beispielsweise auch schon an der Vereinzelungsstation S1 vorgesehen werden.

## Patentansprüche

1. Vorrichtung zum Ausrichten von in Aufnahmetaschen (3) einer sich taktweise bewegenden Transfereinrichtung (2) angeordneten Einzelelementen (4), insbesondere von Filterelementen,
umfassend
eine Lageerkennungseinrichtung (S2), welche die Ausrichtung der Einzelelemente (4) in den Aufnahmetaschen (3) feststellt,
eine Ausstoßeinrichtung (5) zum Auswerfen der als nichtzutreffend erkannten Einzelelemente (4) aus den zugeordneten Aufnahmetaschen (3),
eine Wendeeinrichtung (6) zum Wenden der ausgeworfenen Einzelelemente (4),
eine Einrichtung (5, 8) zum Wiedereinsetzen der gewendeten Einzelelemente (4) in die Aufnahmetaschen (3), und
eine elektronisch Steuereinrichtung zum Steuern der aufeinander folgenden Arbeitsschritte,
wobei das wenigstens eine um 180° verdrehbare Wendeelement als Wendezylinder (6) mit diametral verlaufenden Aufnahmebohrungen bzw. Ausnehmungen (6.1) ausgebildet ist,
der Wendezylinder (6) in einer Lagerbohrung einer stationären Hülse (7) oder eines Blocks (70) verdrehbar ist, und
wobei die Hülse (7) oder der Block (70) den Enden einer Aufnahmebohrung (6.1) gegenüberliegend Bohrung oder Ausnehmung (7.2, 7.3, 70.2, 70.3) aufweist, von denen die von den Aufnahmetaschen (3) abliegende Blasbohrung (7.2, 70.2) einen Durchmesser aufweist, der kleiner ist als der Durchmesser der Aufnahmebohrungen (6.1), während die Bohrungen bzw. Ausnehmungen angrenzend an die Aufnahmetaschen (3) der Querschnittsform der Aufnahmetaschen entsprechen.

2. Vorrichtung nach Anspruch 1, wobei mehrere Wendezylinder (6) mit diametral verlaufenden Bohrungen (6.1) nebeneinanderliegend verdrehbar als Wendeeinrichtung vorgesehen sind.

3. Vorrichtung nach einem der Ansprüche 1 und 2, wobei wenigstens eine lösbare Rückhalteeinrichtungen vorgesehen ist, welche ein zu wendendes Einzelelement (4) in dem Wendeelement (6) zur Abgabe bereithält.

4. Vorrichtung nach einem der Ansprüche 1 bis 3, wobei die Aufnahmetaschen (3) mit einer Blasbohrung (3a) versehen sind.

5. Vorrichtung nach einem der Ansprüche 1 bis 4, wobei die Wendeeinrichtung (6) relativ zur Transfereinrichtung (2) verschiebbar ist.

6. Vorrichtung nach Anspruch 5, wobei an der Wendeeinrichtung (6) eine elektronische Kamera zur Lageerkennung der Filterelemente angebracht ist, die durch Steuersignale die Auswerfeinrichtung an den einzelnen Aufnahmetaschen (3) steuert.

7. Vorrichtung nach Anspruch 1, wobei unter der Transfereinrichtung (2) eine Blas- und Saugvorrichtung (5) angeordnet ist, durch die wahlweise an einzelnen Bohrungen (3a) Unterdruck oder Überdruck angelegt werden kann, und die Blas- und Saugvorrichtung (5) durch die elektronische Steuereinrichtung in Abhängigkeit von Steuersignalen umgeschaltet wird, die von der Lageerkennungseinrichtung (S2) abgegeben werden.

8. Vorrichtung nach Anspruch 1, wobei eine Blas- und Saugvorrichtung (8) über der Hülse (7) bzw. dem Block (70) angeordnet ist, durch die wahlweise Saugdruck oder Unterdruck an den Bohrungen (7.2) der Hülse (7) bzw. des Blocks (70) angelegt werden kann.

9. Vorrichtung nach Anspruch 1, wobei auf dem Innenumfang der Hülse (7) Nuten über einen Teil des Innenumfangs der Hülse (7) verlaufen, die mit den Bohrungen (7.2) in Verbindung stehen.

## Claims

1. Device for aligning individual elements (4), in particular filter elements, arranged in receiving pockets (3) of a cyclically moving transfer means (2),
comprising
a position recognition means (S2), which detects the alignment of the individual elements (4) in the receiving pockets (3),
an ejection means (5) for ejecting those individual elements (4) recognised as non-compliant from the associated receiving pockets (3),
a turning means (6) for turning the ejected individual elements (4),
a means (5, 8) for re-inserting the turned individual elements (4) into the receiving pockets (3), and an electronic control means for controlling successive working steps,
wherein the turning element that can be rotated by at least 180° is designed as a turning cylinder (6) with diametrically extending receiving bores or recesses (6.1),
the turning cylinder (6) can be rotated in a positioning bore of a stationary sleeve (7) or a block (70), and
wherein the sleeve (7) or the block (70) has bores or recesses (7.2, 7.3, 70.2, 70.3) opposite the ends of a receiving bore (6.1), of which the blow bore (7.2, 70.2) furthest from the receiving pockets (3) has a diameter that is smaller than the diameter of the receiving bores (6.1), whilst the bores or recesses bordering on the receiving pockets (3) equal the cross-sectional shape of the receiving pockets.

2. Device according to claim 1, wherein several turning cylinders (6) with diametrically extending bores (6.1) are envisaged rotatably next to each other as a turning means.

3. Device according to one of the claims 1 and 2, wherein at least one disconnectable retention means is envisaged, which holds an individual element (4) to be turned ready for delivery in the turning element (6).

4. Device according to one of the claims 1 to 3, wherein the receiving pockets (3) are equipped with a blow bore (3a).

5. Device according to one of the claims 1 to 4, wherein the turning means (6) can be displaced relative to the transfer means (2).

6. Device according to claim 5, wherein an electronic camera for recognition of the position of the filter elements is affixed to the turning means (6), which controls the ejection means at the individual receiving pockets (3) with control signals.

7. Device according to claim 1, wherein a blow and suction device (5) is arranged under the transfer means (2), with which underpressure or overpressure can optionally be applied to individual bores (3a), and the blow and suction device (5) can be switched by the electronic control means depending on control signals generated by the position recognition means (S2).

8. Device according to claim 1, wherein a blow and suction device (8) is arranged above the sleeve (7) or the block (70), with which suction pressure or underpressure can optionally be applied to the bores (7.2) of the sleeve (7) or the block (70).

9. Device according to claim 1, wherein grooves extend on the inner circumference of the sleeve (7) across a part of said inner circumference of the sleeve (7), which are connected with the bores (7.2).

## Revendications

1. Dispositif pour orienter des éléments individuels (4), en particulier des éléments filtrants, disposés dans des poches de réception (3) d'un dispositif de transfert (2) se déplaçant en cadence,
comprenant
un dispositif de détection de position (S2) qui détermine l'orientation des éléments individuels (4) dans les poches de réception (3),
un dispositif d'éjection (5) pour l'éjection des éléments individuels (4) détectés comme ne convenant pas des poches de réception (3) associées,
un dispositif de retournement (6) pour le retournement des éléments individuels (4) éjectés,
un dispositif (5, 8) pour la réinsertion des éléments individuels (4) retournés dans les poches de réception (3), et
un dispositif de commande électronique pour la commande des étapes de travail consécutives,
dans lequel l'au moins un élément de retournement pouvant tourner de 180° est réalisé en tant que cylindre de retournement (6) avec des perçages de réception ou évidements (6.1) s'étendant diamétralement,
le cylindre de retournement (6) peut tourner dans un perçage de palier d'une douille (7) stationnaire ou d'un bloc (70), et
dans lequel la douille (7) ou le bloc (70) présente, à l'opposé des extrémités d'un perçage de réception (6.1), un perçage ou évidement (7.2, 7.3, 70.2, 70.3), dont le perçage de soufflage (7.2, 70.2) éloigné des poches de réception (3) présente un diamètre qui est inférieur au diamètre des perçages de réception (6.1) alors que les perçages ou évidements correspondent de manière contiguë aux poches de réception (3) à la forme de section transversale des poches de réception.

2. Dispositif selon la revendication 1, dans lequel plusieurs cylindres de retournement (6) sont prévus avec des perçages (6.1) s'étendant diamétralement de manière à pouvoir tourner l'un à côté de l'autre en tant que dispositif de retournement.

3. Dispositif selon l'une quelconque des revendications 1 et 2, dans lequel au moins un dispositif de retenue amovible est prévu, lequel tient prêt un élément individuel (4) à retourner dans l'élément de retournement (6) pour la remise.

4. Dispositif selon l'une quelconque des revendications 1 à 3, dans lequel les poches de réception (3) sont pourvues d'un perçage de soufflage (3a).

5. Dispositif selon l'une quelconque des revendications 1 à 4, dans lequel le dispositif de retournement (6) peut être coulissant par rapport au dispositif de transfert (2).

6. Dispositif selon la revendication 5, dans lequel une caméra électronique est montée sur le dispositif de retournement (6) pour la détection de position des éléments de filtre qui commande, par des signaux de commande, le dispositif d'éjection au niveau des poches de réception (3) individuelles.

7. Dispositif selon la revendication 1, dans lequel un dispositif de soufflage et d'aspiration (5) est disposé sous le dispositif de transfert (2), par lequel une dépression ou surpression peut être créée au choix au niveau des perçages individuels (3a), et le dispositif de soufflage et d'aspiration (5) est commuté par le dispositif de commande électronique en fonction de signaux de commande qui sont émis par le dispositif de détection de position (S2).

8. Dispositif selon la revendication 1, dans lequel un dispositif de soufflage et d'aspiration (8) est disposé au-dessus de la douille (7) ou du bloc (70), par lequel au choix la pression d'aspiration ou de dépression peut être créée au niveau des perçages (7.2) de la douille (7) ou du bloc (70).

9. Dispositif selon la revendication 1, dans lequel sur la périphérie intérieure de la douille (7) des rainures s'étendent sur une partie de la périphérie intérieure de la douille (7), lesquelles sont en liaison avec les perçages (7.2).
